Europäisches Patentamt

European Patent Office

Office européen des brevets

(19)

(11) Publication number: **0 373 397**

**A1**

(12)

# EUROPEAN PATENT APPLICATION

(21) Application number: **89121613.7**

(22) Date of filing: **23.11.89**

(51) Int. Cl.5: **A47J 39/00**

(30) Priority: **15.12.88 IT 3076488**

(43) Date of publication of application:
**20.06.90 Bulletin 90/25**

(84) Designated Contracting States:
**AT BE CH DE ES FR GB GR LI NL SE**

(71) Applicant: **C & D REFRIGERATION S.p.A.**
**Via Tagliavini 10**
**I-42045 Luzzara (Reggio Emilia)(IT)**

(72) Inventor: **Ferlin, Renzo**
**Via Sografi 31/2**
**I-35100 Padova(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Monolithic column particularly for preserving food products and for preparing them to be eaten.**

(57) This monolithic column is intended for preserving and preparing foods to be eaten, and is particularly suitable for use e.g. in public fast food concerns, small to medium tourist and hotel food concerns.

The column comprises a lower refrigerating unit (2) and an upper heating and/or reviving unit (3).

Conveniently, an extractable resting plane (5) is interposed therebetween.

EP 0 373 397 A1

## MONOLITHIC COLUMN PARTICULARLY FOR PRESERVING FOOD PRODUCTS AND FOR PREPARING THEM TO BE EATEN

The present invention relates to a monolithic column particularly for preserving food products and for preparing them to be eaten.

The column is particularly but not exclusively suitable for use in public fast-food concerns and small-to-medium tourist and hotel food concerns and in small-to-medium communities as well as in confectioner's, baker's, gastronomy workshops etc.

The aim of the present invention is to provide a monolithic column the use whereof facilitates the work of the staff assigned to preparing food.

Within this aim, an object of the invention is to provide a monolithic column the use whereof increases the operating comfort of its operators, while speeding the operations for preparing the preserved food to be eaten.

Another important object is to provide a monolithic column which can be similarly used also for pre-cooking and preserving food.

Another object is to provide a monolithic column which can perform its individual functions separate from one another.

Not least object is to provide a monolithic column which is safe in use for the operators and is easy to maintain.

This aim, these objects and others which will become apparent hereinafter are achieved by a monolithic column particularly for preserving food products and for preparing them to be eaten, characterized in that it comprises a lower refrigerating unit and an upper heating and/or reviving unit.

An extractable resting plane and/or a possible space at intermediate temperature is advantageously interposed between the refrigerating unit and the heating and/or reviving unit.

Further characteristics and advantages of the invention will become apparent from the detailed description of an embodiment thereof, illustrated only by way of non-limitative example in the accompanying drawings, wherein the only figure is a perspective view of a monolithic column according to the invention.

With reference to the drawing, the monolithic column is generally indicated by the reference numeral 1 and comprises a lower professional refrigerating unit 2 above which there is a professional oven 3.

In particular, the refrigerating unit 2 is adapted to preserve and/or freeze products and is therefore suitable for mid-term preservations of food products of any kind.

Said refrigerating unit 2 is conveniently provided with an opaque or transparent door or with opaque and/or transparent doors which can be opened both leftwards and rightwards, and is equipped with a condensing unit 4 which is arranged in the rear upper part (behind the oven 3) and is provided with its own supporting base.

The condensing unit 4 can be accessed without trouble for maintenance and/or servicing interventions.

Said oven 3 is advantageously of the microwave type and is therefore particularly suitable for heating or reviving the refrigerated, frozen or deep-frozen products previously contained or not in the refrigerating unit 2.

The microwave oven 3 integrated in the column 1 complies with the current European rules and is furthermore equipped with all the elements required for the safety of its operator, as well as with the service accessories such as for example a timer with a digital or similar indication of the cooking or reviving times, internal lighting for viewing through the glass door, etc.

It should be appreciated the considerable operative comfort of the operators when upon the request of the users they extract the desired product from the refrigerating unit 2 and place it effortlessly in the oven to prepare it to be eaten.

In a similar manner, a product may be precooked in the oven 3 and then immediately transferred to the refrigerating unit 2 for preservation.

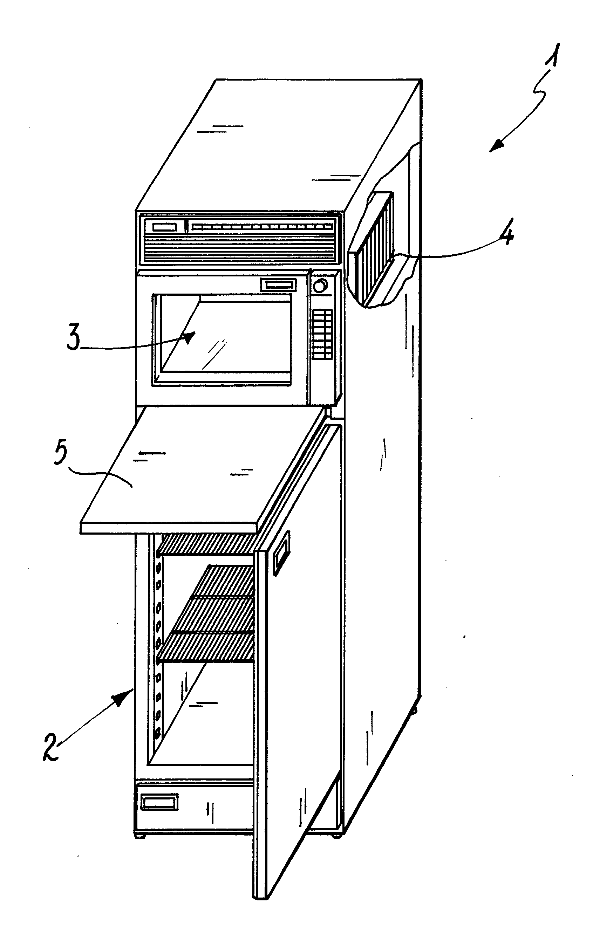

An extractable resting plane 5 is furthermore visible in the embodiment of figure 1; said plane may be possibly interposed between the refrigerating unit 2 and the oven 3 and is useful for resting the products in transferring them from one region of the column 1 to the other.

In the case of particular applications, a space at intermediate temperature may also be conveniently interposed between the refrigerating unit 2 and the oven 3.

Within the scope of the same technical concept, the microwave oven may naturally be replaced for example by a static oven or by an oven with warm air circulation provided by convection or again by an oven using any other kind of heating method (steam-convection, steam) or with a leavening unit.

The possible addition of an autonomous element for producing ice in flakes or cubes and/or of a lower neutral drawer for containing miscellaneous items is furthermore provided.

The monolithic column may furthermore be provided with pivoting wheels adapted to facilitate its movement from one point to the other of the utilization site.

In practice it has thus been observed that the invention has brilliantly achieved the intended aim and objects.

In practice the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A monolithic column particularly for preserving food products and for preparing them to be eaten, characterized in that it comprises a lower refrigerating unit (2) and an upper heating and/or reviving unit (3).

2. A monolithic column, characterized in that it comprises an extractable plane (5) interposed between said refrigerating unit (2) and said heating and/or reviving unit (3).

3. A monolithic column, characterized in that it comprises a space at intermediate temperature interposed between said refrigerating unit (2) and said heating and/or reviving unit (3).

4. A monolithic column according to claim 1, characterized in that said lower refrigerating unit (2) is constituted by a preservation refrigerator and/or by a freezer and/or by a deep-freezer.

5. A monolithic column according to claim 1, characterized in that said upper heating and/or reviving unit (3) is constituted by a microwave oven or by a static oven or by an air-circulation oven or by a leavening unit or again by an oven which uses any other kind of heating method.

6. A monolithic column, characterized in that it can comprise a device for producing ice in flakes or cubes.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2570810 (RICAGNI CONDIZIONATORI)<br>* the whole document *<br>--- | 1, 2, 4-6 | A47J39/00 |
| X | EP-A-143066 (GRANDI)<br>* page 2, line 34 - page 5, line 31; figures 1-5 *<br>--- | 1-5 | |
| X | FR-A-2550432 (ALEMANI)<br>* page 2, line 28 - page 5, line 6; figures 1-3 *<br>----- | 1, 4, 5 | |

|  |  |
|---|---|
|  | TECHNICAL FIELDS SEARCHED (Int. Cl.5)<br><br>A47J |

The present search report has been drawn up for all claims

| Place of search | Date of completion of the search | Examiner |
|---|---|---|
| THE HAGUE | 29 MARCH 1990 | FUOCHI R. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)